# EUROPÄISCHE PATENTSCHRIFT

(11) **EP 1 536 883 B1**
(45) Veröffentlichungstag und Bekanntmachung des Hinweises auf die Patenterteilung: **28.03.2007**
(21) Anmeldenummer: 03757787.1
(22) Anmeldetag: 04.09.2003
(51) Int. Cl.: B01J 13/02, B01J 13/04, C08K 3/00, C08K 5/00, C08K 9/10, C08L 21/00

(54) **MIKROKAPSELN FÜR DIE KAUTSCHUKHERSTELLUNG UND VERFAHREN ZU DEREN HERSTELLUNG**
MICROCAPSULES USED FOR PRODUCING RUBBER AND METHOD FOR THEIR PRODUCTION
MICROCAPSULES DESTINEES A LA FABRICATION DE CAOUTCHOUC ET PROCEDE DE FABRICATION DES MICROCAPSULES

(30) Priorität: 10.09.2002 DE 10241942
(43) Veröffentlichungstag der Anmeldung: 08.06.2005
(73) Patentinhaber: Schill & Seilacher AG, 71032 Böblingen (DE)
(72) Erfinder: JOBMANN, Monika, 21614 Buxtehuder (DE); RAFLER, Gerald, 14473 Potsdam (DE); SAGALA, Jozef, 71032 Böblingen (DE); GROSS, Ingeborg, 70199 Stuttgart (DE)
(74) Vertreter: Pfenning, Meinig & Partner GbR
(86) Internationale Anmeldenummer: PCT/EP2003/009825
(87) Internationale Veröffentlichungsnummer: WO 2004/024313

(56) Entgegenhaltungen:
- WO-A-99/27012
- WO-A-99/27013
- CH-A- 564 370
- DE-A- 19 727 848
- FR-A- 2 603 273
- US-A- 2 623 079
- US-A- 4 092 285
- US-A- 4 528 354
- US-A1- 2002 065 148

## Beschreibung

Die Erfindung betrifft schwefelhaltige Mikrokapseln, die bei Temperaturen oberhalb 150°C Schwefel rasch freisetzen, und ein Verfahren zur Herstellung dieser Mikrokapseln mit nicht-schmelzbaren polymeren Wandmaterialien aus einem Reaktivharz und einer zusätzlichen Schicht zur Verbesserung der Gleitfähigkeit in hochviskosen und hochabrasiven Polymermischungen bzw. zum kontrollierten Abtrag mit einer Korngröße von 1 - 30 *µ*m. Partikelgeometrie und -morphologie lassen sich über polymerspezifische (Netzwerkdichte, Polymerstruktur) und/oder technologische Parameter der Partikelbildung (Partikelgröße des zu verkapselnden Schwefel, Scherung bei Einsatz von flüssigem Schwefel, Reaktionsbedingungen für die Wandbildung) gezielt einstellen. Schwefelhaltige Mikrokapseln mit komplex aufgebauter Partikelwand sind vor allem zur optimierten Kautschukvulkanisation einsetzbar, da sie unter den Bedingungen der Herstellung und Lagerung dieser Kautschukmischungen stabil sind.

Zur Vernetzung von Synthese-(Dienkautschuken) und Naturkautschuken wird vorzugsweise Schwefel eingesetzt. Vor der Heißvulkanisation muß der Schwefel zusammen mit Füllstoffen und weiteren Additiven bei Temperaturen bis 110°C gut in die mastizierte Kautschukmischung, d. h. mechanisch und thermisch abgebaute Kautschuke, eingearbeitet werden. Bei Temperaturen von 100°C ist Schwefel in der Kautschukmischung gut löslich. Beim Abkühlen der Mischung erfolgt jedoch eine unerwünschte Heterogenisierung des Systems durch Kristallisation des Schwefels, die zu Vulkanisationsproblemen führt. Eine Lagerung der Kautschukmischung bei höheren Temperaturen zur Vermeidung des Auskristallisierens führt zu vorzeitiger Vernetzung und Minderung der Produktqualität in den Kautschukprodukten.

Die zeitliche und/oder örtliche Verfügbarkeit von reaktiven oder nichtreaktiven Additiven für Kunststoffe, z. B. Thermoplaste, Elastomere, Duromere, läßt sich effizient durch Umhüllung oder Einbettung in linearkettige oder netzwerkbildende Polymere steuern. Derartige polymerbasierte Mikrokomposite sind in Form von Mikrokapseln mit Kern-Schale-Struktur bzw. von mikroskaligen Matrixpartikeln mit weitgehend homogener Verteilung der Komponenten über den Partikelquerschnitt bekannt (Ch.A.Finch, R.Bodmeier: "Microencapsulation" in Ullmann's Encyclopedia of Industrial Chemistry, 6^{th} Ed. 2001 Electronic Release). Der Kern von Mikrokapseln kann in fester, flüssiger oder gasförmiger Form (Hohlkugeln) vorliegen. Bei Matrixpartikeln sind homogen- und heterogenphasige Systeme bekannt.

Verfahren zur Herstellung von polymerbasierten Mikropartikeln mittels reaktiver und nichtreaktiver Partikelbildungsprozesse sind vielfach beschrieben. Bei der reaktiven Partikelbildung erfolgt die Bildung der Wand oder der Matrix parallel zu einem Polymerisations-, Polykondensations- oder Polyadditionsprozess. Bei den nichtreaktiven Verfahren werden filmbildende Polymere direkt eingesetzt, die auf thermodynamische Weise zur Phasenseparation und zur Partikelbildung gebracht werden (M. Jobmann, G.Rafler: Pharm. Ind. 60 (1998) 979).

Für reaktive Verfahren zur Verkapselung fester oder flüssiger Kernmaterialien werden sehr häufig Melamin-Formaldehyd-Harze eingesetzt (DE 199 23 202), aber auch Isocyanat/Amin-Systeme werden beschrieben. Melamin-Formaldehyd-Harze sind zur Umhüllung hydrophober Kernmaterialien vielfältig und problemlos einsetzbar, und sie können zur Partikelbildung aus wässriger Phase appliziert werden. Reaktivverfahren erfordern Kernmaterialien, die inert gegenüber den wand- bzw. matrixbildenden Monomeren oder Oligomeren sind, d.h. daß sie keine Reaktion mit anderen beteiligten Komponenten eingehen. Ausgenommen die Melamin-Formaldehyd-Harze sind bei diesen Reaktivverfahren häufig lange Reaktionszeiten von bis zu 24 h erforderlich. Die Mikrokapselgröße kann in Abhängigkeit von den Reaktionsbedingungen, z.B. Emulgatorzusatz oder Dispergiermethode, zwischen 10 und 150 µm liegen. Für eine Monomerkonzentration unter 10 Masse-% und bei Einsatz von hochscherenden Dispergierwerkzeugen können auch Größen um 1 µm erreicht werden (EP 0 653 444) .

Bei den nichtreaktiven Verfahren wird ein Polymeres aus Lösung durch Dispergier-, Vertropfungs- oder Sprühprozesse bzw. über Verfahren, die auf dem Prinzip der Flüssig-Flüssig-Phasentrennung basieren, in eine partikuläre Form überführt. Dispergier-, Vertropungs- und Sprühverfahren umfassen eine Lösungsmittelverdampfung, Phasentrennverfahren dagegen basieren auf dem Prinzip der Ausfällung des Wandmaterials, z.B. durch Zugabe einer inkompatiblen Komponente zur Polymerlösung. Ausschlaggebend für die Auswahl eines Kapselverfahrens ist die Löslichkeit des polymeren Wand- bzw. Matrixmaterials in einem organischen Lösungsmittel sowie die Verträglichkeit des zu verkapselnden bzw. einzubettenden Wirkstoffs mit diesem Lösungsmittel.

Die Palette von kommerziellen oder in Marktvorbereitung befindlichen polymerbasierten Mikrokompositen in Form von Mikrokapseln oder mikroskaligen Matrixpartikeln wird neben den "klassischen" Applikationen bei den Durchschreibepapieren vor allem von Erzeugnissen des Life Sciences Sektors dominiert. Es sind Schutz- oder Abgabesysteme für Wirkstoffe der pharmazeutischen, kosmetischen und agrochemischen Industrie bzw. Lebens- und Futtermitteladditive, die durch Mikroverkapselung in ihrem Verarbeitungs- und Applikationsverhalten optimiert werden.

Die Eigenschaften mikroskaliger Zwei- oder Mehrstoffsysteme sollten sich jedoch auch im Werkstoffbereich, vorzugsweise bei der Prozess- und Materialoptimierung in vielfältiger Weise nutzen lassen. Derartige Einsatzfelder sind beispielsweise die kontrollierte Freisetzung von Reaktionskomponenten, Katalysatoren, Initiatoren und Stabilisatoren, die Vereinfachung von Dosier-, Misch- und Trennprozessen oder die Verbesserung der Kompatiblität von Kunststoffadditiven. Voraussetzung für die Anwendung polymerbasierter Mikrokapseln oder Matrixpartikel zur Prozess- und/oder Materialoptimierung ist deren thermische, mechanische und Medienstabilität unter den jeweiligen technologischen Prozess- bzw. materialtypischen Einsatzbedingungen sowie die Möglichkeit einer steuerbaren Freisetzung der umhüllten bzw. eingelagerten Substanzen, wie Reaktivkomponenten, Katalysatoren, Stabilisatoren, etc. Für den Einsatz in vulkanisierbaren Elastomeren ist die temporäre Stabilität der Mikrokapseln oder Materialmatrix unter Formulierbedingungen in Knetern, Kalandern oder Doppelschneckenextrudern bei Temperaturen bis 120°C und hohen Scherbeanspruchungen sowie ihre Zerstörung mit schneller Schwefelfreisetzung unter Heißvulkanisationsbedingungen bei über 150 °C unabdingbare Voraussetzung.

In der DE 197 54 342 werden mit diversen Polymer- bzw. Wachsmaterialien umhüllte Schwefelpartikel beschrieben, die Schwefel durch Aufschmelzen bzw. Auflösen der Kapselwand in der Kautschukmischung bei Temperaturen von 120 - 140°C freisetzen. Unterhalb der Schmelztemperatur der Kapselwand sollen die Kapseln stabil sein. Die geringen Temperaturunterschiede zwischen Stabilität und Aufschmelzung oder Auflösen der Kapselwand sind in dem Kautschukprozess infolge unkontrollierter Erwärmung durch Friktion beim Mischen der hochviskosen Mischungen technologisch äußerst schwer beherrschbar. Ein Vulanisationsverfahren mit Einsatz von unter Mastikationsbedingungen stabil verkapseltem Schwefel und Freisetzung durch Aufschmelzung oder Auflösung der Kapselwand bei den nur wenig höheren Temperaturen der Heißvulkanisation ist infolge zu geringer Parametervariation nicht zu realisieren.

Linearkettige, thermoplastisch verformbare Polymere oder Wachse sind für die Mikroverkapselung von Prozesshilfsmitteln, Reaktionskomponenten oder eigenschaftsmodifizierten Additiven generell nur begrenzt anwendbar, da sie unter Compoundier- und Verarbeitungsbedingungen von üblichen Polymermaterialien verformt, aufgelöst oder zerstört werden. Die erforderlichen Schmelzpunktdifferenzen von mindestens 40 - 50°C können nur selten für sehr niedrig erweichende Polymere realisiert werden. Prinzipiell stehen zwar temperaturbeständige Polymere, wie Polyaramide (das Poly-m-phenylen-isophthalamid, das Poly-p-phenylen-terephthalamid), Polyacrylnitril, Polysulfone, Polyetherketone, etc., für die nichtreaktive Verkapselung von Prozesshilfsstoffen oder Materialadditiven zur Verfügung, aber sie können für die Mikroverkapselung bisher nicht oder nur sehr eingeschränkt eingesetzt werden, da sie - ausgenommen das Poly-m-phenylen-isophthalamid und Polyacrylnitril - strukturbedingt erhebliche Löslichkeitsprobleme in eingeführten organischen Lösungsmitteln aufweisen.

WO 99 27 012 A offenbart Mikrokapseln, die sich von der Mikrokapseln der vorliegenden Anmeldung unterscheidet dadurch, daß dem Aufbau besteht aus zwei Schalen aus einem ersten Polymer und wobei zusätzlich auf der obersten Schale keine spezifische Gleit- oder Antragsschicht aufgebracht ist.

Der Erfindung liegt daher die Aufgabe zugrunde, mikroverkapselten Schwefel mit hoher mechanischer Stabilität unter Mastifizierbedingungen und einem kontrolliert in der Vulkanisationsstufe zerstörbaren Wandmaterial nach einem effizienten Verfahren herzustellen.

Diese Aufgabe wird durch die gattungsgemäßen Mikrokapseln mit den kennzeichnenden Merkmalen des Anspruchs 1 sowie dem Verfahren zu deren Herstellung gemäß Anspruch 12 gelöst. Die weiteren abhängigen Ansprüche zeigen vorteilhafte Weiterbildungen auf. In Anspruch 21 wird die Verwendung der erfindungsgemäßen Mikrokapseln beschrieben.

Erfindungsgemäß werden Mikrokapseln aus mindestens einem ein Kautschukadditiv enthaltendem Kern sowie mindestens einer Schale aus einem ersten Polymer bereitgestellt. Auf der Oberfläche der Mikrokapseln ist dabei mindestens eine Beschichtung aus einem vom ersten Polymer sich unterscheidenden zweiten Polymer und/oder einer niedermolekularen anorganischen oder organischen Verbindung als Gleit- oder Abtragschicht zur Reduzierung der Haftreibung abgeschieden.

Der mit einem Polymer verkapselten Schwefel besteht aus einem mikroskaligen Partikel, dessen Schale aus einem unter Mastifikationsbedingungen nicht schmelzbaren Polymer sowie mindestens einer zusätzlichen Beschichtung zur Minderung der Haftreibung bzw. aus einer kontrolliert mechanisch bei der Einarbeitung in die Kautschukmischung abbaubaren zweiten oder weiteren Schale aufgebaut ist.

Vorzugsweise ist die Schale bzw. die Schalen aus dem ersten Polymer unter Mastifizierbedingungen mechanisch und bis mindestens 120 °C, bevorzugt bis 140°C, thermisch stabil. Das erste Polymer kann auch zur Stabilisationsverbesserung in Form von mindestens zwei Schalen aufgebracht sein. In diesem Fall wird nach der Einkapselung des Kautschukadditivs mit dem ersten Polymer, gegebenenfalls nach Ausschabung, mindestens eine zweite Schale aus dem ersten Polymer aufgebracht.

Das Kautschukadditiv ist dabei unter Vulkanisationsbedingungen, also bei Temperaturbedingungen um etwa 150 °C, kontrolliert freisetzbar.

Als Kautschukadditive werden vorzugsweise gemahlener oder flüssiger Schwefel verwendet. Der Schwefelanteil der Mikrokapseln liegt dabei bevorzugt bei mehr als 70 Gew.-%, besonders,bevorzugt zwischen 80 und 95 Gew.-%.

Das erfindungsgemäß eingesetzte erste Polymer zur Ausbildung der mindestens einen Schale ist vorzugsweise ein Reaktivharz, das ausgewählt ist aus der Gruppe der Aminoharze wie Dicyandiamid-Formaldehydharz oder Melamin-Formaldehydharz oder Phenol-Formaldehydharz. Das zweite Polymer, das für die haftmindernde oder kontrolliert abbaubare Beschichtung der-Mikrokapsel eingesetzt wird, ist ein Polymer, das sich strukturell von dem ersten Polymer unterscheidet und vorzugsweise ein linearkettiges Polymer ist. Bevorzugt ist das zweite Polymer dabei ausgewählt aus der Gruppe Polyacrylate, Polyacrylnitrile, Polyethylenglycole, Ethylcellulosen, Stärke-Fettsäureester und Stärkecarbamate langkettiger Isocyanate.

Eine andere Alternative für die Beschichtung besteht darin, niedermolekulare organische oder anorganische Substanzen wie z.B. Wachse, Fettsäurederivate, Polysaccharide, Silikone, Siloxane oder Silicate zu verwenden.

Partikelgeometrie sowie Partikelgröße und Ihre Verteilung sind eine Funktion des Schwefelkerns. Bevorzugt beträgt die mittlere Partikelgröße zwischen 1 und 30 µm, besonders bevorzugt zwischen 5 und 20 µm. Für gemahlenen Schwefel sind die Partikelparameter durch Geometrie, Größe und Verteilung des Pulvers vorgegeben. Bei der Verkapselung von flüssigem Schwefel sind die Partikelparameter eine Funktion der Dispergierung des flüssigen Schwefels in der wässrigen bzw. organischen Lösung des ersten Polymers. Zur Vermeidung von Agglomaratbildung im Kapselkern kann die Ausbildung der Schale zusätzlich unter Ultraschallbehandlung durchgeführt werden.

Die Dicke der Schale bzw. Schalen beträgt vorzugsweise zwischen 30 und 100 nm. Die Dicke der Schale und der Beschichtung zusammengenommen beträgt vorzugsweise zwischen 40 und 200 nm.

Erfindungsgemäß wird ebenso ein Verfahren zur Herstellung von Mikrokapseln aus einem mindestens ein Kautschukadditiv enthaltendem Kern, mindestens einer Schale aus einem ersten Polymer sowie mindestens einer Gleit- oder Abtragschicht mit folgenden Schritten:
a) Zunächst wird das Kautschukadditiv in einer ein erstes Polymer bildenden Präpolymerlösung dispergiert.
b) Die Mikrokapseln werden durch Zusatz eines Katalysators und/oder durch Temperaturerhöhung ausgehärtet.
c) Im Anschluss wird die Gleit- oder Abtragschicht aus einem vom ersten Polymer sich unterscheidenden zweiten Polymer und/oder einer niedermolekularen anorganischen oder organischen Verbindung auf der Oberfläche der Mikrokapsel abgeschieden.

Die Aufbringung des ersten Polymers auf dem Kautschukadditiv kann dabei als Batch-Prozess, quasikontinuierlich oder auch kontinuierlich in bekannten Reaktoren und mit bekannten Rühr- und Dispergiertechniken für Verkapselungsprozesse durchgeführt werden. Zur Stabilisationsverbesserung kann das erste Polymer auch in Form von mindestens zwei Schalen aufgebracht werden. In diesem Fall ist es günstig, nach Einkapselung des Additivs mit dem ersten Polymer eine thermische oder chemische Aushärtung durchzuführen und dann eine zweite Schale auf das eingekapselte Additiv aufzubringen. Die Abscheidung der Gleit- oder Abtragschicht kann bei Einsatz eines zweiten Polymers mittels analoger Ausrüstung abgeschieden werden.

Zur Verkapselung mit dem ersten Polymer wird als Kautschukadditiv vorzugsweise gemahlener oder flüssiger Schwefel eingesetzt. Die Aufbringung der Gleit- oder Abtragschicht erfolgt bei Verwendung des zweiten Polymers in Schritt c) in Abhängigkeit von der Polymerstruktur nach bekannten Verfahren der nicht-reaktiven Verkapselung, vorzugsweise durch Koazervation, Lösungsmittelverdampfung, Aussalzen oder Sprühtrocknung. Niedermolekulare Beschichtungsmittel werden bevorzugt aus organischer Lösung oder wässriger Dispersion aufgebracht. Vorzugsweise erfolgt vor dem Aufbringen der Gleit- bzw. Abtragschicht eine Separation der schwefelhaltigen Mikrokapseln von der Präpolymerlösung. Es ist aber auch eine direkte Weiterverarbeitung möglich, vorzugsweise dann, wenn Sprühprozesse angewendet werden können.

Die Gleit- oder Abtragschicht kann vorzugsweise durch Sprühprozesse abgeschieden werden.

Erfindungsgemäß hergestellt Mikropartikel können nach Aufbringung der Gleit- oder Abtragschicht durch Zusatz bekannter Granulierhilfsmittel oder auch mittels des für die Beschichtung verwendeten zweiten Polymers oder der niedermolekularen anorganischen oder organischen Verbindung granuliert werden.

Die erfindungsgemäßen Mikropartikel können im Synthese- oder Naturkautschuk sprüh- oder vakuumgetrocknet eingesetzt werden. Filtertrockene Mikrokapseln mit einem Restfeuchtegehalt von 2 %, wie sie nach der Separation aus organischer Beschichtungsmittellösung erhalten werden, können direkt eingesetzt werden.

Erste Informationen zur Verkapselungseffiziens und zur Dichte der Wand erhält man aus Schwärzungsuntersuchungen mit Schwefelprodukten an Kupferfolien sowie durch Extraktionsversuche mit Schwefelkohlenstoff.

In Tabelle 1 ist die Dichte und Stabilität von schwefelhaltigen Mikrokapseln basierend auf Mahlschwefel als Ausgangsmaterial dargestellt.

| **Material** | **Schwärzung Cu-Folie [h]** | **Maximal extrahierbarer Schwefel [%]** |
|---|---|---|
| Mahlschwefel, unverkapselt | sofort | 100 |
| Mahlschwefel, Einfachwand aus M/F-Harzen | 2 | 3,5 |
| Mahlschwefel, Doppelwand aus M/F-Harzen | 8 | 0,1 |
| Mahlschwefel geölt, Doppelwand aus M/F-Harzen | 8 | 0,1 |
| Mahlschwefel, Doppelwand aus M/F-Harzen, thermische Nachhärtung | 20 | *0,1* |
| Mahlschwefel, Doppelwand aus MIF-Harzen, chemische Nachhärtung | 24 | *0,1* |
| Mahlschwefel, Doppelwand aus M/F-Harzen mit Stearatbeschichtung | 24 | 1,7 |
| Mahlschwefel, Doppelwand aus M/F-Harzen mit Paraffinwachsbeschichtung | 24 | 2,3 |
| Mahlschwefel, Doppelwand aus M/F-Harzen mit Acrylatbeschichtung | 26 | 1,3 |
| Mahlschwefel, Doppelwand aus M/F mit Ethylzellulosebeschichtung | 22 | 0,8 |
| Mahlschwefel, Doppelwand aus M/F-Harzen, thermische Nachhärtung, Stearatbeschichtung | 32 | 0,2 |

In Tabelle 2 ist die Dichte und Stabilität von schwefelhaltigen Mikrokapseln basierend auf flüssigem Schwefel als Ausgangsmaterial dargestellt.

| **Material** | **Schwärzung Cu-Folie [h]** | **Maximal extrahierbarer Schwefel [%]** |
|---|---|---|
| Schwefel, Einfachwand aus M/F-Harzen | 3 | 4,3 |
| Schwefel, Doppelwand aus M/F-Harzen | 12 | 0,3 |
| Schwefel, Doppelwand aus M/F-Harzen mit Stearatbeschichtung | 24 | 0,2 |
| Schwefel, Doppelwand aus M/F-Harzen mit Paraffinwachsbeschichtung | 24 | 1,2 |
| Schwefel, Doppelwand aus M/F-Harzen mit Acrylatbeschichtung | 12 | 2,1 |
| Schwefel, Doppelwand aus M/F mit Ethylzellulosebeschichtung | 36 | nicht nachweisbar |
| Schwefel, Doppelwand aus M/F-Harzen, thermische Nachhärtung, Stearatbeschichtung | 36 | nicht nachweisbar |
| Schwefel, Doppelwand aus M/F-Harzen, chemische Nachhärtung, Stearatbeschichtung | *38* | *0,1* |

Die Erfindung wird anhand der folgenden Beispiele erläutert, ohne diese auf die Ausführungsformen einzuschränken.

### Beispiel 1 (monolagige Kapselwand aus Melamin-Formaldehyd-Harz)

In einem Rührgefäß werden 96 g feingemahlener Schwefel, 28 g Melamin-Formaldehyd-Harz (M/F-Harz) des Typs PIAMID M 50 und 16,8 g Zitronensäure in 480 ml Wasser mit einem Hochleistungsrühr-.und Dispergiergerät (ULTRA-TURRAX) bei 60 °C intensiv durchmischt. Die Wandbildung ist nach 10 min abgeschlossen. Zur Aushärtung wird noch 120 min unter Rührung mit einem geringscherenden Rührer nachkondensiert. Die Kapseln werden abgetrennt und in filterfeuchtem Zustand auf Schwefelfreisetzung und Stabilität in der Kautschukmischung getestet.

Ausbeute, mikroverkapselter Schwefel, filterfeucht: 115 g
Extrahierbarer Schwefel: 3,5 %
Stabilität nach Kautschukeinarbeitung: 120 h

### Beispiel 2 (Doppelwand)

Dispergiergerät (ULTRA-TURRAX) bei 60 °C intensiv durchmischt. Die Wandbildung ist nach 10 min abgeschlossen. Zur Aushärtung wird noch 120 min unter Rührung mit einem geringscherenden Rührer nachkondensiert. Die Mikrokomposite werden abgetrennt und in analoger Weise mit 28 g M/F-Harz in Gegenwart von 16,8 g Zitronensäure in 480 ml Wasser ein zweites Mal verkapselt. Die Kapseln werden abgetrennt und in filterfeuchtem Zustand auf Schwefelfreisetzung und Stabilität in der Kautschukmischung (wie in Beispiel 1 beschrieben) getestet.

Ausbeute, mikroverkapselter Schwefel, filterfeucht: 120 g
Extrahierbarer Schwefel: 0,1 %
Stabilität nach Kautschukeinarbeitung: 168 h

### Beispiel 3 (Doppelwand)

In einem Rührgefäß werden 96 g feingemahlener Schwefel, 28 g Melamin-Formaldehyd-Harz des Typs PIAMID M 50 und 16,0 g Isophthalsäure in 480 ml Wasser mit einem Hochleistungsrühr- und Dispergiergerät (ULTRA-TURRAX) bei 60 °C intensiv durchmischt. Die Wandbildung ist nach 10 min abgeschlossen. Zur Aushärtung wird noch 120 min unter Rührung mit einem geringscherenden Rührer nachkondensiert. Die Mikrokomposite werden abgetrennt und in analoger Weise mit 28 g M/F-Harz in Gegenwart von 16,0 g Isophthalsäure in 480 ml Wasser ein zweites Mal verkapselt. Die Kapseln werden abgetrennt und in filterfeuchtem Zustand auf Schwefelfreisetzung und Stabilität in der Kautschukmischung (wie in Beispiel 1 beschrieben) getestet.

Ausbeute, mikroverkapselter Schwefel, filterfeucht: 120 g
Extrahierbarer Schwefel: 0,1 %
Stabilität nach Kautschukeinarbeitung: 275 h

### Beispiel 4 (Doppelwand, thermische Nachhärtung)

In einem Rührgefäß werden 96 g feingemahlener Schwefel, 28 g Melamin-Formaldehyd-Harz des Typs PIAMID M 50 und 16,8 g Zitronensäure in 480 ml Wasser mit einem Hochleistungsrühr- und Dispergiergerät (ULTRA-TURRAX) bei 60 °C intensiv durchmischt. Die Wandbildung ist nach 10 min abgeschlossen. Zur Aushärtung wird noch 120 min unter Rührung mit einem geringscherenden Rührer nachkondensiert.

Die Mikrokomposite werden abgetrennt und in analoger Weise mit 28 g M/F-Harz in Gegenwart von 16,8 g Zitronensäure in 480 ml Wasser ein zweites Mal verkapselt.

Die Kapseln werden abgetrennt, 6 h bei 110 °C nachgehärtet und auf Schwefelfreisetzung und Stabilität in der Kautschukmischung (wie in Beispiel 1 beschrieben) getestet.

Ausbeute, mikroverkapselter Schwefel: 110 g
Extrahierbarer Schwefel: 0,1 %
Stabilität nach Kautschukeinarbeitung: 360 h

### Beispiel 5 (Doppelwand, chemische Nachhärtung)

In einem Rührgefäß werden 96 g feingemahlener Schwefel, 28 g Melamin-Formaldehyd-Harz des Typs PIAMID M 50 und 16,8 g Zitronensäure in 480 ml Wasser mit einem Hochleistungsrühr- und Dispergiergerät (ULTRA-TURRAX) bei 60 °C intensiv durchmischt. Die Wandbildung ist nach 10 min abgeschlossen. Zur Aushärtung wird noch 120 min unter Rührung mit einem geringscherenden Rührer nachkondensiert.

Die Mikrokomposite werden abgetrennt und in analoger Weise mit 28 g M/F-Harz in Gegenwart von 16,8 g Zitronensäure in 480 ml Wasser ein zweites Mal verkapselt.

Die Kapseln werden abgetrennt, in 0,1 m Amidosulfonsäure bei 60 °C 1 h nachgehärtet und auf Schwefelfreisetzung und Stabilität in der Kautschukmischung (wie in Beispiel 1 beschrieben) getestet.

Ausbeute, mikroverkapselter Schwefel, filterfeucht : 120 g
Extrahierbarer Schwefel: 0,1 %
Stabilität nach Kautschukeinarbeitung: 350 h

### Beispiel 6 (Doppelwand)

100 g Schwefel werden bei 130 °C aufgeschmolzen und die Schmelze zügig einem Mikroverkapselungsansatz, bestehend aus 28 g Melamin-Formaldehyd-Harz des Typs PIAMID M 50 und 12,0 g Isophthalsäure und 480 ml Wasser zugeführt und mit einem Hochleistungsrühr- und Dispergiergerät (ULTRA-TURRAX) bei 90 °C intensiv durchmischt. Die Wandbildung um die feinverteilten Schwefelpartikel ist nach 4 min abgeschlossen. Zur Aushärtung wird noch 120 min unter Rührung mit einem geringscherenden Rührer nachkondensiert. Die Mikrokomposite werden abgetrennt und in analoger Weise mit 28 g M/F-Harz in Gegenwart von 16,0 g Isophthalsäure in 480 ml Wasser ein zweites Mal verkapselt. Die Kapseln werden abgetrennt und in filterfeuchtem Zustand auf Schwefelfreisetzung und Stabilität in der Kautschukmischung (wie in Beispiel 1 beschrieben) getestet.

Ausbeute, mikroverkapselter Schwefel, filterfeucht : 125 g
Extrahierbarer Schwefel: nicht nachweisbar
Stabilität nach Kautschukeinarbeitung: 336 h

### Beispiel 7 (Doppelwand)

100 g Schwefel werden bei 130 °C aufgeschmolzen und die Schmelze zügig einem Mikroverkapselungsansatz, bestehend aus 28 g Melamin-Formaldehyd-Harz des Typs PIAMID M 50 und 12,0 g Isophthalsäure und 480 ml Wasser zugeführt und mit einem Hochleistungsrühr- und Dispergiergerät (ULTRA-TURRAX) bei 90 °C intensiv durchmischt. Die Wandbildung um die feinverteilten Schwefelpartikel ist nach 4 min abgeschlossen. Zur Aushärtung wird noch 120 min unter Rührung mit einem geringscherenden Rührer nachkondensiert.

Die Mikrokomposite werden abgetrennt und in analoger Weise mit 28 g M/F-Harz in Gegenwart von 16,0 g Isophthalssäure in 480 ml Wasser ein zweites Mal verkapselt.

Die Kapseln werden abgetrennt und in filterfeuchtem Zustand auf Schwefelfreisetzung und Stabilität in der Kautschukmischung (wie in Beispiel 1 beschrieben) getestet.

Ausbeute, mikroverkapselter Schwefel, filterfeucht: 125 g
Extrahierbarer Schwefel: nicht nachweisbar
Stabilität nach Kautschukeinarbeitung: 396 h

### Beispiel 8 (komplexe Kapselwand bestehend aus Doppelmantel und Gleitschicht)

100 g analog Beispiel 2, 3 oder 4 hergestellte filterfeuchte Mikrokomposite mit M/F-HarzDoppelwand werden mit 20 g Paraffinwachs gelöst in 0,5 l Benzin bei 70 °C beschichtet. Die beschichteten Mikrokomposite werden bei der Beschichtungstemperatur abgetrennt und luftgetrocknet.

Ausbeute, beschichteter mikroverkapselter Schwefel, lufttrocken: 104 g
Extrahierbarer Schwefel: 1,2 %
Stabilität nach Kautschukeinarbeitung: 336 h

### Beispiel 9 (komplexe Kapselwand bestehend aus Doppelmantel und Gleitschicht)

100 g analog Beispiel 2, 3 oder 4 hergestellte filterfeuchte Mikrokomposite mit M/F-Harz-Doppelwand werden mit 20 g Calciumstearat gelöst in 0,5 l Toluen bei 90 °C beschichtet. Die beschichteten Mikrokomposite werden bei der Beschichtungstemperatur abgetrennt und luftgetrocknet.

Ausbeute, beschichteter mikroverkapselter Schwefel, lufttrocken: 106 g
Extrahierbarer Schwefel: nicht nachweisbar
Stabilität nach Kautschukeinarbeitung: 336 h

### Beispiel 10 (komplexe Kapselwand bestehend aus Doppelmantel und Gleitschicht)

300 g analog Beispiel 2, 3 oder 4 hergestellte filterfeuchte Mikrokomposite mit M/F-Harz-Doppelwand werden mit 45 g Polyacrylat des Typs DEGALAN^{®}, gelöst in 0,5 l Aceton, in einem Sprühcoater vom Typ GLATT beschichtet.

Ausbeute, beschichteter mikroverkapselter Schwefel, lufttrocken: 310 g
Extrahierbarer Schwefel: 0,8 %
Stabilität nach Kautschukeinarbeitung: 336 h

### Beispiel 11 (komplexe Kapselwand bestehend aus Doppelmantel und Gleitschicht)

300 g analog Beispiel 2, 3 oder 4 hergestellte filterfeuchte Mikrokomposite mit M/F-Harz-Doppelwand werden mit 45 g Ethylzellulose in Cyclohexan mikroverkapselt. Die Polymerabscheidung auf den schwefelhaltigen M/F-Mikrokapseln erfolgt durch einen gesteuerten Abkühlprozess der in heißem Cyclohexan löslichen Ethylzellulose.

Ausbeute, beschichteter mikroverkapselter Schwefel, trocken: 310 g
Extrahierbarer Schwefel: nicht nachweisbar
Stabilität nach Kautschukeinarbeitung: 336 h

### Beispiel 12

In einem mit entsprechender Rührtechnik ausgestatteten Reaktor werden 50 l Wasser und 7 l einer 2 N Zitronensäure vorgelegt und auf 60 °C erwärmt. Dieser verdünnten Zitronensäurelösung werden 7,5 l Melaminharzlösung zudosiert. Nach einer Vorkondensationszeit von 5 min. werden 10 kg Mahlschwefel unter intensiver Mischung mit einem Turbinenrührer rasch eingetragen. Die Mikrokomposite werden abgetrennt und in analoger Weise mit 7,5 l M/F-Harzlösung in Gegenwart von 7 l einer 2 N Zitronensäure in 50 l Wasser ein zweites Mal verkapselt.
Die Kapseln werden abgetrennt und in filterfeuchtem Zustand auf Schwefelfreisetzung und Stabilität in der Kautschukmischung (wie in Beispiel 1 beschrieben) getestet.
11, 5 kg der doppelt verkapselten Schwefelpartikel werden in filterfeuchtem Zustand mit 500 g Paraffinwachs gelöst in 10 l Benzin bei 70 °C beschichtet.
Die beschichteten Mikrokomposite werden bei der Beschichtungstemperatur abgetrennt und luftgetrocknet.

Ausbeute, beschichteter mikroverkapselter Schwefel, trocken: 12,0 kg
Extrahierbarer Schwefel: 0,2 %
Stabilität nach Kautschukeinarbeitung: 336 h

### Beispiel 13

Analog Beispiel 7 werden 10 kg Schwefel aufgeschmolzen, mit M/F-Harz doppelt mikroverkapselt, mit einer Paraffinwachsgleitschicht ausgerüstet, separiert und getrocknet.

Ausbeute, beschichteter mikroverkapselter Schwefel, trocken: 12,0 kg
Extrahierbarer Schwefel: 0,1 %
Stabilität nach Kautschukeinarbeitung: 336 h

### Beispiel 14 (komplexe Kapselwand bestehend aus Doppelmantel und Gleitschicht)

100 g analog Beispiel 4, 5 oder 7 hergestellte Mikrokomposite mit nachgehärteter M/F-Harz-Doppelwand werden mit 20 g Calciumstearat, gelöst in 0,5 l Toluen, bei 90 °C beschichtet. Die beschichteten Mikrokomposite werden bei der Beschichtungstemperatur abgetrennt und luftgetrocknet.

Ausbeute, beschichteter mikroverkapselter Schwefel, lufttrocken: 106 g
Extrahierbarer Schwefel: nicht nachweisbar
Stabilität nach Kautschukeinarbeitung: 436 h

## Patentansprüche

1. Mikrokapseln aus einem mindestens ein Kautschukadditiv enthaltendem Kern sowie mindestens zwei Schalen aus einem Reaktivharz ausgewählt aus der Gruppe der Aminoharze, wie Dicyandiamid-Formaldehydharz oder Melamin-Formaldehydharz oder Phenol-Formaldehydharz,
wobei auf der Oberfläche der Mikrokapseln mindestens eine Gleit- oder Abtragsschicht ausgewählt aus der Gruppe der Polyacrylate, Polyacrylnitrile, Polyethylenglykole, Ethylcellulosen, Stärke-Fettsäureester und Stärkecarbamate langkettiger Isocyanate oder aus niedermolekularen anorganischen oder organischen Verbindungen ausgewählt aus der Gruppe der Wachse, Fettsäurederivate, Silikone, Siloxane und Silikate, aufgebracht ist.

2. Mikrokapseln aus nach Anspruch 1,
**dadurch gekennzeichnet, dass** die Schalen mechanisch und bis mindestens 120 °C thermisch stabil sind.

3. Mikrokapseln nach mindestens einem der vorhergehenden Ansprüche,
**dadurch gekennzeichnet, dass** das Kautschukadditiv unter Vulkanisationsbedingungen kontrolliert freisetzbar ist.

4. Mikrokapseln nach mindestens einem der vorhergehenden Ansprüche,
**dadurch gekennzeichnet, dass** das Kautschukadditiv gemahlener oder flüssiger Schwefel ist.

5. Mikrokapseln nach mindestens einem der vorhergehenden Ansprüche,
**dadurch gekennzeichnet, dass** der Schwefelanteil der Mikrokapseln mehr als 50 Gew.-%, bevorzugt zwischen 80 und 95 Gew.-%, beträgt.

6. Mikrokapseln nach mindestens einem der vorhergehenden Ansprüche,
**dadurch gekennzeichnet, dass** der mittlere Partikeldurchmesser der Mikrokapseln zwischen 1 und 50 µm, bevorzugt zwischen 5 und 20 µm beträgt.

7. Mikrokapseln nach mindestens einem der vorhergehenden Ansprüche,
**dadurch gekennzeichnet, dass** die Schale eine Dicke zwischen 30 und 100 nm aufweist.

8. Mikrokapseln nach mindestens einem der vorhergehenden Ansprüche,
**dadurch gekennzeichnet, dass** die Schale und die mindestens eine Beschichtung zusammen eine Dicke zwischen 40 und 200 nm besitzen.

9. Verfahren zur Herstellung von Mikrokapseln aus einem mindestens ein Kautschukadditiv enthaltenden Kern, sowie mindestens zwei Schalen und mindestens einer Gleit- oder Abtragsschicht nach einem der Ansprüche 1 bis 8 mit folgenden Schritten;
a) Dispergierung des Kautschukadditivs in einer die erste Schale bildenden Prepolymerlösung,
b) Aushärten der Mikrokapseln chemisch, z.B. durch Zusatz eines Katalysators und/oder durch Temperaturerhöhung,
c) Abscheidung der zweiten Schale aus einer die zweite Schale bildenden Prepolymerlösung,
d) Abscheidung mindestens einer Gleit- oder Abtragsschicht auf der Oberfläche der Mikrokapseln.

10. Verfahren nach Anspruch 9,
**dadurch gekennzeichnet, dass** als Kautschukadditiv gemahlener oder flüssiger Schwefel eingesetzt wird.

11. Verfahren nach mindestens einem der Ansprüche 9 oder 10,
**dadurch gekennzeichnet, dass** als die die Schalen bildenden Polymere ein Reaktivharz ausgewählt aus der Gruppe Melamin-Formaldehydharz oder Phenol-Formaldehydharz eingesetzt wird.

12. Verfahren nach mindestens einem der Ansprüche 9 bis 11,
**dadurch gekennzeichnet, dass** nach dem Aushärten in Schritt b) die Mikrokapseln von der Prepolymerlösung separiert werden.

13. verfahren nach mindestens einem der Ansprüche 9 bis 12,
**dadurch gekennzeichnet, dass** das Polymer der Gleit- oder Abtragsschicht durch Koazervation, Lösungsmittelverdampfung, Aussalzen oder Sprühtrocknung abgeschieden wird.

14. verfahren nach mindestens einem der Ansprüche 9 bis 12,
**dadurch gekennzeichnet, dass** die Gleit- oder Abtragsschicht durch Sprühprozesse abgeschieden wird.

15. Verfahren nach mindestens einem der Ansprüche 9 bis 14,
**dadurch gekennzeichnet, dass** die die Gleit- oder Abtragsschicht bildenden niedermolekularen anorganischen oder organischen Verbindungen aus organischer Lösung oder wässriger Dispersion abgeschieden werden.

16. Verfahren nach mindestens einem der Ansprüche 9 bis 15,
**dadurch gekennzeichnet, dass** die Mikrokapsel bei der Abscheidung in Schritt d) mittels des zweiten Polymers und/oder der niedermolekularen anorganischen oder organischen Verbindung granuliert wird.

17. Verfahren nach mindestens einem der Ansprüche 9 bis 16,
**dadurch gekennzeichnet, dass** die Mikrokapsel nach der Abscheidung in Schritt d) mittels eines Granulierhilfsmittels granuliert wird.

18. Verwendung der Mikrokapseln nach mindestens einem der Ansprüche 1 bis 8 für die Kautschukvulkanisation.

## Claims

1. Microcapsules made from a core containing at least one rubber additive and at least two shells made from a reactive resin selected from the group of amino resins such as dicyandiamide formaldehyde resin or melamine formaldehyde resin or phenol formaldehyde resin,
there being applied to the surface of the microcapsules at least one sliding or wearing layer selected from the group of polyacrylates, polyacrytonitriles, polyethylene glycols, ethyl celluloses, starch fatty acid esters and starch carbamates of long-chain isocyanates, or from low-molecular inorganic or organic compounds selected from the group of waxes, fatty acid derivatives, silicones, siloxanes and silicates.

2. Microcapsules as in claim 1,
**characterised in that**
the shells are stable mechanically, and up to at least 120 °C thermally.

3. Microcapsules as in at least one of the preceding claims,
**characterised in that**
the rubber additive can be released in a controlled manner under vulcanisation conditions.

4. Microcapsules as in at least one of the preceding claims,
**characterised in that**
the rubber additive is powdered or liquid sulphur.

5. Microcapsules as in at least one of the preceding claims,
**characterised in that**
the proportion of sulphur in the microcapsules is more than 50 % by weight, preferably between 80 and 95 % by weight.

6. Microcapsules as in at least one of the preceding claims,
**characterised in that**
the average particle diameter of the microcapsules is between 1 and 5 µm, preferably between 5 and 20 µm.

7. Microcapsules as in at least one of the preceding claims,
**characterised in that**
the shell has a thickness of between 30 and 100 nm.

8. Microcapsules as in at least one of the preceding claims,
**characterised in that**
the shell and the at least one coating together have a thickness of between 40 and 200 nm.

9. Method of producing microcapsules from a core containing at least one rubber additive, and at least two shells and at least one sliding or wearing layer as given in one of claims 1 to 8, having the following stages:
a dispersing the rubber additive in a pre-polymer solution that forms the first shell
b curing the microcapsules chemically, i.e. by the addition of a catalyst and / or by increasing the temperature
c precipitating the second shell from a pre-polymer solution that forms the second shell
d precipitating at least one sliding or wearing layer on the surface of the microcapsules.

10. Method as in claim 9,
**characterised in that**
powdered or liquid sulphur is used as the rubber additive.

11. Method as in at least one of claims 9 or 10,
**characterised in that**,
a reactive resin selected from the group of melamine formaldehyde resin or phenol formaldehyde resin is used for the polymers that form the shells.

12. Method as in at least one of claims 9 to 11,
**characterised in that**
after the curing process of stage b, the microcapsules are separated from the pre-polymer solution.

13. Method as in at least one of claims 9 to 12
**characterised in that**
the polymer of the sliding or wearing layer is precipitated by means of coacervation, solvent vaporisation, salting out or spray drying.

14. Method as in at least one of claims 9 to 12,
**characterised in that**
the sliding or wearing layer is precipitated by spraying processes.

15. Method as in at least one of claims 1 to 14,
**characterised in that**
the low-molecular inorganic or organic compounds that form the sliding or wearing layer are precipitated from organic solution or aqueous dispersion.

16. Method as in at least one of claims 9 to 15,
**characterised in that**,
at the precipitation process at stage d, the microcapsule is granulated by means of the second polymer and / or the low-molecular inorganic or organic compound.

17. Method as in at least one of claims 9 to 16,
**characterised in that**,
following the precipitation process at stage d, the microcapsule is granulated by means of a granulation aid.

18. Use of the microcapsules as in at least one of claims 1 to 8 for the rubber vulcanisation process.

## Revendications

1. Microcapsules constituées d'un noyau contenant au moins un additif de caoutchouc et au moins de deux coques en résine réactive choisie dans le groupe comprenant les résines amino telles que la résine dicyan-diamide-formaldéhyde ou la résine mélamine-formaldéhyde ou la résine phénol-formaldéhyde, dans lesquelles sur la surface des microcapsules est appliquée au moins une couche de glissement ou une couche anti-friction choisie dans le groupe des polyacrylates, polyacrylanitriles, polyéthylène-glycols, éthyl-celluloses, esters d'acides gras d'amidon et carbamates d'amidon d'isocyanates à chaîne longue ou des composés inorganiques ou organiques de bas poids moléculaire choisis dans le groupe comprenant les cires, dérivés d'acides gras, silicones, siloxanes et silicates.

2. Microcapsules selon la revendication 1, **caractérisées en ce que** les coques sont mécaniquement stables et le sont thermiquement jusqu'à au moins 120° C.

3. Microcapsules selon au moins l'une quelconque des revendications précédentes, **caractérisées en ce que** l'additif de caoutchouc peut être libéré de façon contrôlée dans des conditions de vulcanisation.

4. Microcapsules selon au moins l'une quelconque des revendications précédentes, **caractérisées en ce que** l'additif de caoutchouc est du soufre broyé ou fluide.

5. Microcapsules selon au moins l'une quelconque des revendications précédentes, **caractérisées en ce que** la proportion de soufre des microcapsules est supérieure à 50 % en poids, de préférence, se situe entre 80 et 95 % en poids.

6. Microcapsules selon au moins l'une quelconque des revendications précédentes, **caractérisées en ce que** le diamètre particulaire moyen des microcapsules se situe entre 1 et 50 µm, de préférence entre 5 et 20 µm.

7. Microcapsules selon au moins l'une quelconque des revendications précédentes, **caractérisées en ce que** la coque présente une épaisseur entre 30 et 100 nm.

8. Microcapsules selon au moins l'une quelconque des revendications précédentes, **caractérisées en ce que** la coque et au moins un revêtement possèdent conjointement une épaisseur entre 40 et 200 nm.

9. Procédé de fabrication de microcapsules constituées d'un noyau contenant au moins un additif de caoutchouc et au moins de deux coques et d'au moins une couche de glissement ou une couche anti-friction selon l'une quelconque des revendications 1 à 8, avec les étapes suivantes :
a) la dispersion de l'additif de caoutchouc dans une solution de prépolymère formant la première coque,
b) le durcissement chimique des microcapsules, par exemple par l'addition d'un catalyseur et/ou par augmentation de la température,
c) le dépôt de la deuxième coque constituée d'une solution de prépolymère formant la deuxième coque,
d) le dépôt d'au moins une couche de glissement ou une couche anti-friction sur la surface des microcapsules.

10. Procédé selon la revendication 9, **caractérisé en ce que** l'on utilise comme additif de caoutchouc, du soufre broyé ou fluide.

11. Procédé selon au moins l'une quelconque des revendications 9 ou 10, **caractérisé en ce que** l'on utilise comme polymère formant les coques, une résine réactive choisie dans le groupe des mélamine-formaldéhyde ou phénol-formaldéhyde.

12. Procédé selon au moins l'une quelconque des revendications 9 à 11, **caractérisé en ce que**, après le durcissement à l'étape b), les microcapsules sont séparées de la solution de prépolymère.

13. Procédé selon au moins l'une quelconque des revendications9 à 12 **caractérisé en ce que** le polymère de la couche de glissement ou de la couche anti-friction est déposé par coacervation, évaporation de solvant, relargage ou séchage par pulvérisation.

14. Procédé selon au moins l'une quelconque des revendications 9 à 12, **caractérisé en ce que** la couche de glissement ou la couche anti-friction est déposée par des procédés de pulvérisation.

15. Procédé selon au moins l'une quelconque des revendications 9 à 14, **caractérisé en ce que** les composés inorganiques ou organiques de bas poids moléculaires formant la couche de glissement ou la couche anti-friction sont déposés à partie de solution organique ou de dispersion aqueuse.

16. Procédé selon au moins l'une quelconque des revendications 9 à 15, **caractérisé en ce que** les microcapsules sont granulées lors du dépôt à l'étape d) au moyen du deuxième polymère et/ou du composé inorganique ou organique de bas poids moléculaire.

17. Procédé selon au moins l'une quelconque des revendications 9 à 16, **caractérisé en ce que** les microcapsules sont granulées après le dépôt à l'étape d) au moyen d'un auxiliaire de granulation.

18. Utilisation des microcapsules selon au moins l'une quelconque des revendications 1 à 8, pour la vulcanisation du caoutchouc.
